# EUROPÄISCHE PATENTSCHRIFT

(11) **EP 0 503 451 B1**
(45) Veröffentlichungstag und Bekanntmachung des Hinweises auf die Patenterteilung: **07.02.1996**
(21) Anmeldenummer: 92103661.2
(22) Anmeldetag: 04.03.1992
(51) Int. Cl.: C04B 11/05, C04B 11/00

(54) **Fliessestrich**
Flowing plaster
Plâtre fluide

(30) Priorität: 08.03.1991 DE 4107448
(43) Veröffentlichungstag der Anmeldung: 16.09.1992
(73) Patentinhaber: Gebr. Knauf Westdeutsche Gipswerke KG, D-97343 Iphofen (DE)
(72) Erfinder: Ruf, Heinz, Dr., W-8717 Mainbernheim (DE); Limmer, Bärbel, W-8500 Nürnberg (DE); Hüller, Rolf, Dr., W-8712 Volkach (DE); Wirsching, Franz, Dr., W-8715 Iphofen (DE)
(74) Vertreter: Werner, Hans-Karsten, Dr.

(56) Entgegenhaltungen:
- DE-A- 2 216 039
- DE-A- 2 351 084
- FR-A- 2 377 359
- GB-A- 1 397 421
- H. Grimme, Zement-Kalk-Gips, Heft 7 , 15.Jg, (1962), Seiten 285-298.

## Beschreibung

Gegenstand der vorliegenden Erfindung ist ein Fließestrich aus grob vermahlenem Naturanhydrit der Korngröße < 3 mm, Bindemitteln und üblichen Zusätzen, wie alkalische Anreger, Fließmittel sowie gegebenenfalls Verzögerer.

Ein derartiger Fließestrich ist beschrieben in der DE-A1-31 15 979. Die dort beschriebene selbstnivellierende Mörtelmischung hat sich in der Praxis gut bewährt. Wesentlicher Bestandteil dieser Mörtelmischung ist jedoch ein synthetischer Anhydrit, welcher in Zukunft nicht mehr oder nicht mehr in ausreichenden Mengen zur Verfügung steht. Die Anregung in diesen Produkten ist alkalisch, nämlich durch Zusatz von Zement und Anregersalz. Die beiden Anreger müssen so aufeinander abgestimmt werden, daß es weder zu Dehnungsspannungen noch zu Schrumpfrissen kommt. Diese Feinabstimmung ist möglich, da das Produkt gemäß DE-A1-31 15 979 vorgefertigt angeliefert wird und an der Baustelle nur noch mit Wasser angerührt werden muß.

Die DE-A1-37 30 067 beschreibt ebenfalls eine selbstnivellierende Mörtelmischung, welche überwiegend grobkörnigen synthetischen Anhydrit und gleichzeitig feingemahlenen synthetischen Anhydrit enthält.

Die DE-A1-31 27 436 beschreibt eine selbstnivellierende Fußbodenestrichmischung auf Basis von natürlichem Anhydrit, bei der ausgewählt hochwertiger natürlicher Anhydrit zusammen mit sauren, sulfatischen Anregern auf eine bestimmte Sieblinie vermahlen werden muß, um dann auf der Baustelle mit Betonsand, Wasser und einem Plastifikator verarbeitet zu werden. Diese Mischung quillt beim Abbinden. Die Notwendigkeit, wesentliche Komponenten genau dosiert auf der Baustelle zusammenzugeben, ist ein weiterer schwerwiegender Nachteil.

Die DE-A-23 51 024 beschreibt ein Verfahren zur Herstellung eines Körpers aus Anhydrit, Anreger, Anmachwasser und gegebenenfalls Zusatzmittel ohne Quarzsand. Der Anreger ist ein sauer Anreger wie Kaliumsulfat und Eisensulfat. Auf dem Bau werden aber vorzugsweise alkalische Produkte verwendet.

Die Erfindung hat sich somit zunächst die Aufgabe gestellt, einen Fließestrich zu entwickeln, welcher keinen Zusatz an synthetischem Anhydrit benötigt. Weiterhin hat sie sich die Aufgabe gestellt, den bekannten Fließestrich bezüglich seiner Eigenschaften bei der Erhärtung und im abgebundenen Zustand zu verbessern.

Diese Aufgabe kann überraschend einfach dadurch gelöst werden, daß als Bindemittel 10 bis 25 Gew.-% feinstvermahlener Naturanhydrit mit einer Korngröße < 60 µm, zusätzlich als Bindemittel bis zu 20 Gew.-% α-Halbhydrat sowie ein alkalischer Anreger eingesetzt werden.

Vorzugsweise wird feinstvermahlener Naturanhydrit mit einer Korngröße von < 40 µm eingesetzt.

Diese Ergebnisse waren nicht vorhersehbar, da dem Fachmann bekannt war, daß feinstvermahlener Naturanhydrit bei alkalischer Anregung beim Abbinden schwindet und dabei zur Rißbildung neigt. Diese Eigenschaft ist obendrein in starkem Maße von dem eingesetzten Naturanhydrit einerseits und dem Vermahlungsgrad andererseits abhängig. Es wurde jetzt gefunden, daß es möglich ist, diese negativen Eigenschaften des Naturanhydrits dadurch auszugleichen, daß dem Gemisch zusätzlich als Bindemittel bis zu 20 Gew.-% α-Halbhydrat, zugesetzt wird. Die erforderliche Menge an Halbhydrat zur Kompensierung des Schwindens und der Rißbildung kann von Fall zu Fall durch einfache Vorversuche ermittelt werden. Es hat sich herausgestellt, daß für jede Art von Naturanhydrit, dem jeweiligen Vermahlungsgrad und der Menge an Feinanteil < 60 µm immer eine definierte Menge an Halbhydrat zugesetzt werden kann, um zu einem Fließestrich zu kommen, der sich weder ausdehnt noch schwindet, so daß er ohne Rißbildung fugenlos verlegt werden kann. Besonders gute Ergebnisse werden erreicht, wenn das Verhältnis des Naturanhydrit-Feinanteils < 60 µm zum Halbhydrat im Bereich 2 bis 10 liegt. Hierbei ist das Feinstkorn aus dem grob vermahlenen Naturanhydrit mit zu berücksichtigen. Zusammen mit üblichen Zusätzen wie Menge und Art des alkalischen Anregers, der Fließmittel sowie gegebenenfalls Verzögerer kann der erfindungsgemäße Fließestrich auf die Erfordernisse der Praxis gezielt eingestellt werden. Gewünscht werden meist hohe Ergiebigkeit, gutes Fließverhalten, steile anfängliche Festigkeitsentwicklung, hohe Endfestigkeiten und eine fertige Oberfläche, die keine Sinterhaut aufweist und nicht zur Schichtenbildung neigt, so daß auch kein Abschleifen erforderlich ist.

Als alkalischer Anreger wird vorzugsweise Zement zusammen mit Kaliumsulfat verwendet.

Als Verflüssiger wird vorzugsweise Ligninsulfonat oder modifiziertes Naphthalin- oder Melaminharz eingesetzt.

Bei Verwendung von Halbhydrat werden im allgemeinen auch Verzögerer zugesetzt. Als Verzögerer kommen beispielsweise hydrolysierte Proteine oder Polycarbonsäuren in Frage. Weitere Zusätze können sein, zum Beispiel Antischaummittel, insbesondere auf Siliconbasis.

Typische erfindungsgemäße Fließestriche bestehen aus 60 bis 85 Gew.-% grob vermahlenem Naturanhydrit mit einer Korngröße bis zu 3 mm und 10 bis 25 Gew.-% feinstvermahlenem Naturanhydrit mit einer Korngröße von < 60 µm, vorzugsweise < 40 µm sowie bis zu 20 Gew.-% α-Halbhydrat, da letzteres zu höheren Anfangs- und Endfestigkeiten des Estrichs führt. Schließlich enthält dieser Fließestrich
2,0 bis 5,0 Gew.-% Zement,
0,5 bis 1,0 Gew.-% Kaliumsulfat als Anreger,
0,03 bis 0,3 Gew.-% Fließmittel und
bis 0,1 Gew.-% Verzögerer.
Das Wasser/Feststoff-Verhältnis beträgt im allgemeinen 0,13 bis 0,25.

Die zur Modifikation des Abbindeverhaltens zugesetzten Halbhydrate können sowohl aus Naturgips als auch aus Rauchgasgips gewonnen werden. Besonders geeignet ist ein im kontinuierlichen Autoklaven-Verfahren hergestelltes α-Halbhydrat mit einer Korngröße < 90 µm und einer Einstreumenge von > 280 g pro 100 ml Wasser.

Das Gesamtgemisch sollte maximal 30 Gew.-% mit einer Korngröße > 1,0 mm enthalten, maximal 60 Gew.-% mit einer Korngröße > 0,1 mm und maximal 90 Gew.-% mit einer Korngröße > 0,01 mm. Der Mindestgehalt an einer Korngröße von < 10 µm liegt bei etwa 10 %, etwa 50 Gew.-% sollte eine Körnung < 100 µm aufweisen. Derartige Gemische lassen sich ausgezeichnet verarbeiten, binden in der gewünschten Weise ab und geben exzellente Endwerte im abgebundenen Zustand.

Die Feinstvermahlung des Naturanhydrits kann in an sich bekannter Weise erfolgen vorzugsweise in Kugelmühlen, Walzenschüsselmühlen, Stiftmühlen oder Feinprallmühlen.

Diese Arten der Feinstmahlung gestatten eine rasche und kostengünstige Verarbeitung unterschiedlicher Naturanhydrit-Qualitäten aus verschiedenen Lagerstätten.

## Patentansprüche

1. Fließestrich aus grob vermahlenem Naturanhydrit der Korngröße < 3 mm, Bindemitteln und üblichen Zusätzen, wie Anreger, Fließmittel sowie gegebenenfalls Verzögerer, dadurch gekennzeichnet, daß als Bindemittel 10 bis 25 Gew.-% feinstvermahlener Naturanhydrit mit einer Korngröße < 60 µm und zusätzlich als Bindemittel bis zu 20 Gew.-% α-Halbhydrat eingesetzt werden und als Anreger ein alkalischer Anreger eingesetzt wird.

2. Fließestrich gemäß Anspruch 1, dadurch gekennzeichnet, daß der feinstvermahlene Naturanhydrit mit einer Korngröße von < 40 µm eingesetzt wird.

## Claims

1. Floating floor screed comprising coarsely ground natural anhydrite of a grain size of < 3 mm, binders and usual additives, such as activators, flow agents and optionally retarders, characterized in that from 10 to 25% by weight of pulverized natural anhydrite of a grain size of < 60 µm is used as a binder and up to 20% by weight of α-semihydrate is used as an additional binder and as an activator, an alkaline activator is used.

2. Floating floor screed according to claim 1, characterized in that said pulverized natural anhydrite is used having a grain size of < 40 µm.

## Revendications

1. Plâtre coulable pour plancher, formé d'anhydrite naturelle grossièrement broyée, ayant des grains d'une dimension < 3 mm, de liants et d'additifs usuels, comme des activateurs, des fluidifiants, ainsi qu'éventuellement des retardateurs, caractérisé en ce qu'on utilise, comme liant, 10 à 25 % en poids d'anhydrite naturelle broyée très finement, ayant des grains d'une dimension < 60 µm, et, en outre, comme liant, jusqu'à 20 % en poids de semi-hydrate α, et, comme activateur, on utilise un activateur alcalin.

2. Plâtre coulable pour plancher selon la revendication 1, caractérisé en ce que l'anhydrite naturelle finement broyée qu'on utilise a des grains d'une dimension < 40 µm.
